# EUROPÄISCHE PATENTSCHRIFT

(11) **EP 3 643 513 B1**
(45) Veröffentlichungstag und Bekanntmachung des Hinweises auf die Patenterteilung: **05.05.2021**
(21) Anmeldenummer: 19020519.5
(22) Anmeldetag: 09.09.2019
(51) Int. Cl.: B60B 3/14

(54) **ZENTRALVERSCHLUSSSYSTEM MIT FELGE**
CENTRAL CLOSURE SYSTEM WITH RIM
SYSTÈME DE FERMETURE CENTRALISÉE POURVU DE LISTEL

(30) Priorität: 07.09.2018 DE 202018004150 U
(43) Veröffentlichungstag der Anmeldung: 29.04.2020
(73) Patentinhaber: SCC Fahrzeugtechnik GmbH, 91166 Georgensmünd (DE); Wheelsandmore GmbH & Co. KG, 52499 Baesweiler (DE)
(72) Erfinder: Gundel, Georg, 91166 Georgensgmünd (DE)
(74) Vertreter: Bauer, Dirk

(56) Entgegenhaltungen:
- DE-A1- 4 205 579
- DE-A1- 19 608 601
- DE-T2- 69 411 175
- DE-U1- 9 307 180
- JP-U- S58 196 207
- KR-A- 20040 034 756

## Beschreibung

Die vorliegende Erfindung betrifft ein System aufweisend eine Felge mit einem Zentralverschlusssystem entsprechend dem Oberbegriff des Anspruchs 1 und wie es aus Dokument DE 694 11 175 T2 bekannt ist.

Aus dem Stand der Technik sind verschiedene Zentralverschlusssysteme bekannt, die bei Rennwagen zum Einsatz kommen. Diese Systeme weisen eine Zentralnabe auf, auf der eine Felge aufgesetzt und mittels Zentralverschlussmutter direkt benachbart zur Bremsscheibe befestigt wird. Eine Befestigung von Felgen mit Lochkreis ist bei diesen Zentralverschlusssystemen nicht möglich. Für Wagen mit Straßenzulassungen wiederum sind Systeme auf dem Markt, die mittels eines Adapters die Nutzung eines Zentralverschlusssystems an Radnaben mit Lochkreis ermöglichen. Hierbei ist es notwendig, für jedes Fahrzeug einen an den Lochkreis angepassten Adapter wie auch eine an den jeweiligen Adapter und das Fahrzeug passende Felge zu wählen.

Aufgabe der vorliegenden Erfindung ist es, ein Zentralverschlusssystem zu schaffen, welches einerseits eine Flexibilität hinsichtlich des Einsatzes an verschiedenen Fahrzeugen schafft, andererseits hinsichtlich der Nutzung einen sicheren Einsatz des Zentralverschlusssystems und seiner Komponenten bietet.

Diese Aufgabe wird mit einem System mit den Merkmalen des Anspruchs 1 aufweisend eine Felge und ein Zentralverschlusssystem gelöst. Vorteilhafte Ausgestaltungen und Weiterbildungen gehen aus nachfolgenden Ansprüchen hervor.

Es wird ein System vorgeschlagen, aufweisend eine Felge mit einem Zentralverschlusssystem, wobei die Felge keinen Lochkreis für Radbolzen zur Befestigung an einer Radnabe aufweist, sondern eine Zentralbohrung zur Befestigung an der Radnabe hat. Vorzugsweise ist die Felge eine geschmiedete Felge aus einem Aluminium- oder Magnesiummaterial. Besonders bevorzugt ist die Felge einteilig. Das Zentralverschlusssystem kann jedoch auch mit Felgen zum Einsatz kommen, bei denen die Felgen aus Stahl, einer Aluminiumlegierung und/oder einer Magnesiumlegierung und/oder einem anderen Werkstoff sind und/oder zwei- oder dreiteilig zusammengesetzt sind.

Das Zentralverschlusssystem weist eine Zentralverschlussmutter, eine Adapterplatte und eine Sicherungsschraube zum Sichern der Zentralverschlussmutter an der Adapterplatte auf, wobei die Felge auf der zu der Radnabe zugewandten Seite mehrere Einlassungen, vorzugsweise geschlossene Bohrungen, zur Aufnahme von zumindest jeweils einem Mitnehmer, vorzugsweise einem Mitnehmerbolzen, aufweist. Das Zentralverschlusssystem weist eine Adapterplatte zur Anordnung und Befestigung an einer ersten Radnabe auf und die Adapterplatte hat einen Lochkreis mit Durchlässen zur Aufnahme von Radbolzen. Die Adapterplatte weist die Mitnehmer auf, die komplementär zu den Einlassungen der Felge sind, wobei die Adapterplatte eine erste Ebene aufweist, in der die Durchlässe zur Aufnahme der Radbolzen angeordnet sind. Die Mitnehmer sind bevorzugt ohne Spiel, insbesondere bevorzugt mittels einer Presspassung mit dem Adapter verbunden. Sie können auch stofflich mit der Adapterplatte verbunden sein. Die Adapterplatte hat einen mittig zentriert durch die Zentralbohrung in die Felge ragenden, bevorzugt stoffschlüssig mit der Adapterplatte verbundenen Hohlzylinder, der ein Außengewinde aufweist, welches komplementär zu einem Innengewinde der Zentralverschlussmutter ist. Der Hohlzylinder ist topfförmig. Der Hohlzylinder weist einen Innenhohlraum auf zur umfangsseitigen und stirnseitigen Umhüllung einer Radnabe. Die Zentralverschlussmutter weist einen Außenkonus auf, dessen Form komplementär zu einem Innenkonus der Felge ist.

Weiterhin ist die Zentralverschlussmutter topfförmig ausgebildet und die Sicherungsschraube ist in eine Stirnseite des Hohlzylinders verschraubbar. Gemäß der Erfindung ist das Außengewinde des Hohlzylinders der Adapterplatte zwischen der ersten Ebene der Adapterplatte und der Stirnseite des Hohlzylinders angeordnet.

Eine Weiterbildung sieht vor, dass die Adapterplatte des Systems einen kreisförmigen Sockel aufweist, von dem sich der Hohlzylinder in die Felge erstreckt, wobei der Sockel eine Spielpassung mit der Zentralbohrung bildet, während die Mitnehmer eine Spielpassung mit den Einlassungen in der Felge bilden. Bevorzugt wird ein zentriertes Aufsetzen ermöglicht, beispielsweise durch Zuhilfenahme von ein oder mehreren konisch verlaufenden Abschnitten, sei es beispielsweise seitens des Sockels und/oder der Hohlbohrung. Beim Einsetzen erfolgt mittels des oder der konisch verlaufenden Abschnitte ein sich Selbstzentrieren. Hierbei können auch für die Mitnehmer, insbesondere die Mitnehmerbolzen konische Zentrierungen an den Einlassungen, insbesondere den geschlossenen Bohrungen vorgesehen sein, die ein Aufsetzen der Felge erleichtern.

Insbesondere ist die Adapterplatte dahingehend ausgelegt, dass eine Mittellochbohrung einen Durchmesser zwischen 76 mm und 83 mm aufweist, wodurch eine Vielzahl an Personenkraftwagen mit deren Nabengrößen umhüllt werden können. Die Innengeometrie der Hohlbohrung des Sockels kann hierbei auch konisch, kegelförmig bzw. als Kegelstumpf verlaufen. Mittels einer zylindrischen Geometrie kann jedoch auch eine besonders hohe Genauigkeit erzielt werden.

Eine weitere Ausgestaltung weist die Adapterplatte mit einer Vorderseite auf, die eine erste Ebene aufweist, von der sich direkt der Sockel erhebt, wobei der Sockel eine zweite Ebene bildet, die parallel zu der ersten Ebene verläuft, wobei in der ersten Ebene die Durchlässe für die Radbolzen und Durchbohrungen für die Mitnehmer angeordnet sind, und die erste Ebene eine Felgen-Anlagefläche für die Felge bildet, wobei die Felge eine zu der Felgen-Anlagefläche komplementäre Adapter-Auflagefläche hat, und die Felgen-Anlagefläche und die Adapter-Auflagefläche aneinander liegen, und der Sockel mit der Felge ein Paar an zwei zueinander koaxialen Zylinderflächen bildet, die einen zentrierten Formschluss in allen Richtungen der zu einer Zylinderachse der koaxialen Zylinderflächen senkrechten Ebene bilden.

Auch kann vorgesehen werden, dass die die Adapterplatte eine Rückseite hat, die eine plane Ebene ist, in der die Durchlässe für die Radbolzen, eine Vielzahl an Durchbohrungen für die Mitnehmer und die Öffnung in den Innenhohlraum des topfförmigen Hohlzylinders angeordnet sind, wobei der Innenhohlraum in der topfseitigen Stirnfläche eine zentrierte, durchgehende Gewindebohrung für eine Verschraubung von Zentralverschlussmutter und Adapterplatte aufweist.

Eine Weiterbildung sieht vor, dass das System mit einer zweiten Adapterplatte versehen ist, die einen vom ersten Lochkreis unterschiedlichen Lochkreis zur Befestigung an einer zweiten Radnabe aufweist, wobei die Mitnehmer der zweiten Adapterplatte ebenfalls komplementär zu den Einlassungen der Felge sind. Bevorzugt existieren eine Vielzahl an jeweils unterschiedlichen Adapterplatten, die alle aber geeignete Mitnehmer komplementär zu den Einlassungen einer einzelnen Felge aufweisen. Beispielsweise kann mittels eines Systems unterschiedlicher Adapterplatten, die jeweils an ein Fahrzeug angepasst sind, somit eine Felge an diesen verschiedenen Fahrzeugen genutzt werden. Insbesondere unter der Berücksichtigung der Erlangung einer Allgemeinen Betriebserlaubnis, abgekürzt auch ABE, bzw. der Nutzung eines Teilegutachtens zur Eintragung in einen Fahrzeugschein und damit die Zulassung einer Felge für das zum Fahrzeugschein zugehörige Fahrzeug ermöglicht somit die Kombination einer Vielzahl von einzelnen Adaptern mit einer getesteten Felge und spart einen hohen Prüfaufwand, da nicht für jedes Fahrzeug diese Felge einzeln getestet und zugelassen werden muss. Vielmehr genügt ein Test enthaltend Festigkeitsberechnungen und die entsprechende Anpassung der Adapterplatte an das Fahrzeug. Gleiches gilt auch für das Zentralverschlusssystem bzw. die Zentralverschlussmutter. Einmal ausgelegt, entsprechend getestet und zugelassen, kann das Zentralverschlusssystem bzw. die Zentralverschlussmutter an allen Fahrzeugen im Straßenverkehr zum Einsatz gelangen, beispielsweise über das jeweilige Teilegutachten.

Beispielsweise kann auch ein System vorgesehen sein, bei dem die angezogene Zentralverschlussmutter vollständig umgeben von der Felge unterhalb einer Felgen-Stirnfläche liegt und eine stirnseitige Abdeckung des topfförmigen Hohlzylinders, die in eine Zentralverschlussmutterstirnseite eingesetzt ist, dann ebenfalls unterhalb der Felgen-Stirnfläche verbleibt.

Im Folgenden werden Merkmale beschrieben, welche nicht Teil der beanspruchten Erfindung sind, aber zum Verständnis des Systems beitragen können. Der Schutzumfang wird durch die Ansprüche definiert. Der Adapterplatte kann demnach vorzugsweise aus Aluminium hergestellt sein. Eine weitere Ausgestaltung sieht die Verwendung einer Magnesiumlegierung zur Herstellung des Adapters vor. Eine Ausgestaltung sieht vor, dass der Adapter einteilig hergestellt ist, bevorzugt aus einer Ronde oder Scheibe durch spanabhebende Verfahren, beispielsweise Drehen, Bohren bzw. Fräsen. Jedoch können auch andere Herstellungsverfahren wie zum Beispiel Erodieren oder Walzen für das Gewinde genutzt werden. Neben den obigen Materialien können auch andere Materialien zum Einsatz kommen, beispielsweise Leichtbaustähle, GFK oder CFK. So kann auch der Adapter mehrteilig zusammengesetzt sein, beispielsweise kann die Adapterplatte ein Bauteil bilden und der Hohlzylinder ein anderes Bauteil. Diese können miteinander verfügt werden. Das erlaubt beispielsweise die Nutzung von verschiedenen Werkstoffen für den Adapter. Unterschiedliche Werkstoffe können auch in anderer Weise zum Einsatz am Adapter gelangen. Eine Ausgestaltung sieht vor, dass im Hohlzylinder eine Hülse zur Festigkeitssteigerung des Adapters angeordnet ist. Die Hülse ist bevorzugt aus einem anderen Material als der übrige Adapter. Bevorzugt ist die Hülse aus einem Edelstahl. Aber auch andere Materialien können zum Einsatz kommen. Die Hülse kann beispielsweise in die Hohlbohrung des Hohlzylinders eingeschraubt werden. Hierfür kann die Hohlbohrung ein Innengewinde aufweisen und die Hülse ein dazu passendes Außengewinde. Ebenfalls besteht die Möglichkeit, eine Klemmverbindung für die Hülse in der Hohlbohrung vorzusehen. Auch wiederum besteht die Möglichkeit, die Hülse in der Hohlbohrung zu verkleben, zu verlöten oder in sonstiger Weise derart zu befestigen, dass eine Zugfestigkeitserhöhung am Adapter zwischen der Adapterplatte und dem als Zugbolzen dienenden Hohlzylinder erreicht wird, bevorzugt damit weiter zwischen dem Adapter und der Zentralverschlussmutter die Zugfestigkeit sich erhöht.

Vorstellbar ist weiterhin, dass das Zentralverschlusssystem eine Zentralverschlussmutter und eine Adapterplatte aufweist, wobei die Adapterplatte einen zylindrischen Hohlzylinder, vorzugsweise einen topfförmigen, zylindrischen Hohlzylinder aufweist und entlang eines Außenumfangs des Hohlzylinders, vorzugsweise entlang des gesamten Außenumfangs des Hohlzylinders, sich ein Außengewinde erstreckt, während die Zentralverschlussmutter ein zum Außengewinde komplementäres Innengewinde hat, wobei das Innengewinde sich vorzugsweise zumindest annähernd über die gesamte Innenlänge der Zentralverschlussmutter erstreckt.

Es besteht die Möglichkeit, dass die Zentralverschlussmutter ein Innengewinde aufweist, was sich beispielsweise nicht annähernd über die gesamte Innenlänge erstreckt. Vielmehr kann das Innengewinde auch kürzer sein. Es kann direkt an der Öffnung der Gewindemutter beginnen, aber auch beabstandet dazu sein. Es kann auch vor einem Ende einer Bohrung schon aufhören, das bedeutet, mit einigem Abstand zu dem Ende der Bohrung enden. Beispielsweise kann die Zentralverschlussmutter weniger als zehn Gewindewindungen, insbesondere sechs oder weniger als sechs Gewindewindungen aber mehr als drei Gewindewindungen als Innengewinde aufweisen. Die Zentralverschlussmutter kann über einen Freiraum vor und/oder nach den Gewindewindungen verfügen. Einerseits gelingt es dadurch, eine ausreichende Befestigung erzielen zu können. Zum anderen erlaubt dieses auch eine weitere Gestaltung eines Innenraums der Zentralverschlussmutter, beispielsweise mit einer Markierung. Des Weiteren kann vorgesehen sein, dass nicht nur ein Gewindegang vorhanden ist, sondern zwei oder drei Gewindegänge. Weiterhin kann vorgesehen sein, dass ein selbsthemmendes Gewinde genutzt wird .

Weiterhin ist es möglich, dass eine Stirnseite des topfförmigen Hohlzylinders der Adapterplatte eine Ebene bildet, die parallel zu einer Stirnseite der Zentralverschlussmutter verläuft, wobei vorzugsweise eine zentrierte Sicherungsschraube zum Sichern der Zentralverschlussmutter an die Adapterplatte in die Stirnseite des topfförmigen Hohlzylinders verschraubbar ist. Auch kann vorgesehen sein, dass eine Gewinderichtung der Sicherungsschraube entgegengesetzt zu einer Gewinderichtung des Innengewindes der Zentralverschlussmutter ist.

Eine weitere Ausgestaltung sieht vor, dass die Zentralverschlussmutter ohne weitere zusätzliche Sicherung allein durch das Anzugsmoment und das wirkende Gewinde die Felge an ihrer Position hält. Beispielsweise kann auch eine hochfeste Schraubenverbindungen genutzt werden.

An Stelle einer topfförmigen Stirnseite, die von der Zentralverschlussmutter umgeben ist, kann der Hohlzylinder aber auch dort eine teilweise offene oder insgesamt offene Stirnseite aufweisen.

Vorstellbar ist weiterhin, dass die Zentralverschlussmutter eine Stirnseite aufweist, wobei die Zentralverschlussmutter zweiteilig ist, wobei ein erstes Teil der Zentralverschlussmutter die Stirnseite und die topfförmige, zylindrische Gestalt hat, und ein zweites Teil der Zentralverschlussmutter eine Ringform hat, wobei das zweite Teil über das erste Teil von dem zur Stirnseite entgegengesetzten Ende der Zentralverschlussmutter bewegbar bis zu einem Anschlag angeordnet ist, wobei der Anschlag am ersten Teil als umlaufender Kragen angeordnet ist und eine Weiterbewegung des zweiten Teils in Richtung Stirnseite verhindert, wobei das erste Teil durch die Ringform des zweiten Teil hindurchragt und das zweite Teil eine konische Auflagefläche für die Felge aufweist.

Eine Weiterbildung der Zentralverschlussmutter sieht vor, dass das zweite Teil mit dem ersten Teil verschraubt ist. Bevorzugt ist es, wenn die Verschraubung von erstem und zweitem Teil als nicht-verlierbare Verschraubung ausgeführt ist. Eine nicht-verlierbare Verschraubung wird beispielsweise dadurch geschaffen, dass das erste und das zweite Teil jeweils mit einer von der anderen unterschiedlichen Schraubgeometrie versehen ist. So kann das erste Teil beispielsweise eine andere Steigung aufweisen als das zweite Teil, wobei die beiden Steigungen jedoch derart sind, dass mit Kraftaufwand beide Teile verschraubbar sind. Eine andere Ausgestaltung einer nicht-verlierbaren Verschraubung sieht vor, dass beispielsweise die das Gewinde des zweiten Teils aufweisende Innenbohrung mit Übermaß vorgesehen ist. Beide Teile können verschraubt werden. Durch Überschrauben in einen Freibereich des ersten Teils verlieren die beiden Teile jedoch wieder ihren Kontakt, der bis dahin mittels Verschraubung sichergestellt worden ist. In dem Freibereich kann sich das zweite Teil bewegen, bevorzugt nicht nur längs entlang einer Erstreckung des ersten Teils, insbesondere der topfförmigen, zylindrischen Gestalt. Vielmehr ist es weiter bevorzugt, wenn das zweite Teil, insbesondere in einer Ringform, sich um das erste Teil drehen lassen kann. Die beiden Teile bleiben somit zueinander gesichert. Ein Lösen wird aber verhindert, da ein Zurückschrauben ohne weiteres nicht möglich ist. Durch eine Dimensionierung des Freibereichs angepasst an ein mögliches Spiel beim Zusammensetzen von Zentralverschlussmutter und Felge kann der Bewegungsraum auf das Notwendige beschränkt werden. Innerhalb des Freibereichs sind beide Teile aufeinander sitzend auf vordefinierten zueinander kompatiblen Flächen.

Eine weitere Möglichkeit, eine Unverlierbarkeit zwischen dem ersten und dem zweiten Bauteil zu schaffen, kann beispielsweise darin bestehen, dass nach und/oder bei der Montage eines der beiden Teile einer Verformungskraft ausgesetzt wird. Beispielsweise wird das zweite Teil nach Überstülpen über das erste Teil einer Kraft ausgesetzt, beispielsweise einer Montagekraft beim Zusammenbau mit der Felge. Da das zweite Teil die konische Auflagefläche für die Felge aufweist, kann zum Beispiel beim Montieren eine Verformungskraft auf die Ringform des zweiten Teils ausgeübt werden. Diese ruft eine derartige Verformung am zweiten Teil hervor, dass sich am zweiten Teil eine Sperre bildet, bevorzugt eine Sperre, die sich in dem Freiraum bildet, die ein Herunternehmen des zweiten Teils vom ersten Teil verhindert. Wiederum kann vorgesehen sein, dass eine Nicht-Verlierbarkeit mittels Bördeln eines Randes erfolgt. Beispielsweise kann am Hohlzylinder nach der Montage des zweiten Teils ein Umbördeln erfolgen, so dass das zweite Teil, insbesondere in Form einer Ring-Scheibe mit Konusform oder als ringförmiger Konusabschnitt, an seiner Position zumindest gesichert, insbesondere auch gehalten wird. Auch kann vorgesehen sein, dass der Hohlzylinder aufgedehnt wird nach dem Überstülpen des zweiten Teils. Dadurch wird ein Abnehmen bzw. Verlieren des zweiten Teils verhindert bzw. erschwert.

Weiterhin besteht die Möglichkeit, dass das zweite Teil auf das erste Teil aufgeschrumpft wird. Hierfür kann beispielsweise das zweite Teil erhitzt werden, bevor es auf das erste Teil aufgestülpt bzw. überschraubt wird. Auch besteht die Möglichkeit, das erste Teil abzukühlen, bevor das zweite Teil aufgesetzt wird. Ebenso können das erste Teil abgekühlt und das zweite Teil erwärmt werden, bevor das Überstülpen oder auch Verschrauben erfolgt.

Weitere Gestaltungen können beispielsweise ein oder mehrere Sicherungen vorsehen, die das zweite Teil unverlierbar am ersten Teil sichern. Hierzu kann der Einsatz beispielsweise von zusätzlichem Kunststoff in einer Verschraubung zwischen ersten und zweiten Teil, von Kleber oder einer sonstigen Sicherung vorgesehen sein. Gemäß einer Ausgestaltung nach Zusammenbau können das erste und das zweite Teil nur unter Zerstörung des zweiten, ringförmigen Teils voneinander getrennt werden, wenn sie auseinandergebaut werden sollen.

Eine weitere Ausgestaltung sieht vor, dass beispielsweise das zweite, insbesondere ringförmige Teil austauschbar ist. Aufgrund des wirkenden Drucks beim Zusammenbau des Systems aber auch im langandauernden Betrieb kann es zu einem Verschleiß oder einer Beschädigung kommen. Die Auswechselbarkeit erlaubt eine Weiternutzung des Zentralverschlusssystems und Reparierbarkeit des Systems.

Die Zentralverschlussmutter aus zwei Bauteilen weist diese vorzugsweise derart konstruiert auf, dass eine konische Auflagefläche des zweiten Teils für die Felge eine größere Reibfläche zur Verfügung stellt als eine Kontaktfläche zwischen erstem Teil und zweiten Teil im mit einem Drehmoment anzuziehendem Zustand der Zentralverschlussmutter an der Felge. Bezüglich letzterem ist gemeint, dass das erste und das zweite Teil in Kontakt miteinander sind aufgrund des Anziehens unter Drehmoment. Die Kontaktfläche kann auch ermittelt werden, wenn das zweite Teil fest an das erste Teil angedrückt wird und sodann die dabei erzeugte Reibfläche zwischen erstem und zweitem Teil bestimmt wird. Die Reibfläche zwischen Felge und zweiten Teil ergibt sich durch die konisch geformte Fläche des zweiten Teils, die auf der Felge aufsitzt.

Das zweite Teil, beispielsweise ausgestaltet als Kegelring, bleibt beim Anziehen mittels eines Drehmomenterzeugers eher an der Felge haften. Beim Anziehen der Zentralverschlussmutter stoppt eine Relativbewegung zwischen der Felge und dem zweiten Teil eher als eine Relativbewegung zwischen erstem und zweiten Teil stoppt. Beispielsweise kann vorgesehen sein, dass die miteinander in Kontakt tretenden Oberflächen unterschiedliche Rauigkeiten aufweisen. Auch besteht die Möglichkeit, dass mittels Oberflächengeometrien wie Noppe, Prägungen, Riffelungen oder anderes auf den sich kontaktierenden Oberflächen Einfluss auf die Reibung und/oder die Übertragung des Drehmoments genommen wird.

Weiterhin kann vorgesehen sein, dass die Zentralverschlussmutter aus verschiedenen Materialien hergestellt ist. So kann beispielsweise das erste Teil aus einem anderen Material hergestellt sein als das zweite Teil. Diese unterschiedlichen Materialien können beispielsweise Stahl, insbesondere Edelstahl, vorzugsweise ein hochfester Stahl, eine Magnesiumlegierung, eine Aluminiumlegierung wie auch ein anderes Leichtbaumaterial umfassen. Auch können unterschiedliche Materialien eingesetzt werden wie unterschiedliche Aluminium- oder Magnesiumlegierungen. Auch kann durch Ausnutzung unterschiedlicher Materialien die Reibung zwischen ersten um zweitem Teil einerseits und Felge und zweitem Teil andererseits beeinflusst werden. Besteht die Zentralverschlussmutter nur aus einem Werkstoff, kann bevorzugt einer der vorgenannten genutzt werden. Des Weiteren kann vorgesehen sein, dass die Adapterplatte aus einem gleichen Material besteht wie die Zentralverschlussmutter, beispielsweise einer Aluminiumlegierung oder einer Magnesiumlegierung. Insbesondere bei Leichtbaumaterialien, die für den Adapter genutzt werden, kann eine Erhöhung einer Steifigkeit des Adapters mittels einer Hülse aus einem anderen Material, insbesondere einem steiferen Material, vorzugsweise einem hochsteifem Material, im Hohlzylinder angeordnet erfolgen.

Die Zentralverschlussmutter als zweiteilige Zentralverschlussmutter ist dahingehend zu verstehen, dass nur ein erstes und ein zweites Teil vorgesehen ist, wobei das zweite Teil ringförmig mit einer Konusfläche für die Felge versehen ist. Hierbei kann das erste Teil aber selbst aus zwei oder mehr Bauteilen bestehen. Beispielsweise kann der Kragen ein Bauteil des ersten Teils sein, was befestigt worden ist. Des Weiteren besteht die Möglichkeit, dass eine Verschlusskappe stirnseitig in das erste Teil der Verschlussmutter eingesetzt wird, insbesondere zum Abdecken eines offenen Hohlzylinders oder zum Abdecken einer Sicherungsschraube. Beispielsweise kann die Zentralverschlussmutter eine offene Stirnfläche oder eine zumindest annähernd geschlossene Stirnfläche aufweisen. Auf oder in diese kann sodann die Verschlussklappe eingebracht werden, beispielsweise durch Einclippen, Einschrauben, Einpressen oder in sonstiger Weise.

Es ist zudem eine Felge denkbar, vorzugsweise eine einteilig geschmiedete Felge aus einem Aluminiummaterial, insbesondere eine Felge zur Verwendung mit einem hier offenbarten System und/oder mit einem hier offenbarten Zentralverschlusssystem und/oder mit einer hier offenbarten Zentralverschlussmutter, wobei die Felge vorzugsweise eine einteilig geschmiedete Felge aus einem aluminiumbasierten oder magnesiumbasierten Material ist, mit einer zu einer Zentralverschlussmutter komplementären Auflagefläche in Form eines Innenkonus, mit Streben, die von Außen nach Innen verlaufen und einen axial angeordneten Stern bilden, wobei der Stern den Innenkonus sowie Einlassungen für Mitnehmer auf einer innenliegenden, ebenen Adapter-Auflagefläche aufweist, wobei die Streben zumindest zum Teil einwärts in die Felge verlaufen, so dass der Stern nach Innen versetzt innerhalb der Felge angeordnet ist, und die Felge keinen Lochkreis für Radbolzen zur Befestigung an einer Radnabe aufweist.

Bevorzugt weist die Felge ein Design auf, bei dem die Speichen bzw. Streben nach Innen verlaufen, bis sie an den Stern anstoßen, wobei der Stern eine Größe bzw. einen derartigen Durchmesser aufweist, dass die Adapterplatte nicht sichtbar ist bei montierter Felge. Hierbei können die Speichen bzw. Streben unterschiedliche Geometrien, Richtungen, Geometrien, Wölbungen oder anderes auf. Bevorzugt überdeckt der Stern die Adapterplatte vollständig. Dadurch wird beispielsweise verhindert, dass sich Schmutz zwischen Felge und Adapterplatte absetzen kann. Auch werden bevorzugt offene Bereiche in der Adapterplatte dadurch abgedeckt, insbesondere verschlossen. Neben der Nutzung von Felgen mit Stern und Speichen bzw. Streben können auch Scheibenräder wie auch Kombinationen aus Scheiben und Speichen bzw. Streben zum Einsatz. Auch andere Formen für Felgen sind möglich.

Weiterhin kann vorgesehen sein, dass die Felge ein Design aufweist, bei dem die Designform konvex oder konkav ist, d.h. dass die Streben einem derartigen Formverlauf folgen. Auch kann vorgesehen sein, dass die Radmitte und damit der Stern einen deutlich kleineren Durchmesser aufweist als eine handelsübliche Felge mit Verschraubung über einen Lochkreis. Auch kann der Adapter in seinem durch die Felge abzudeckenden, insbesondere an der Felge aufliegendem Bereich, einen kleineren Durchmesser aufweisen als ein handelsüblicher Adapter für eine Felge vergleichbarer Größe mit Lochkreis.

Der Einsatz einer geschmiedeten Felge aus einem Aluminiummaterial oder einem Magnesiummaterial hat verschiedene Vorteile. Ein wesentlicher Unterschied ist die Gewichtsersparnis nicht nur gegenüber Stahlfelgen sondern auch gegenüber gegossenen Felgen. So können geschmiedete Felgen mehrere Kilogramm leichter sein als gegossene Felgen gleicher Geometrie. Ein weiterer Vorteil des sich ergebenden geringeren Gewichts betrifft dessen Einfluss im Bereich der Auslegung zum Beispiel unter Berücksichtigung von Masse, Massenverhältnissen, Trägheit und Steifheit bei beispielsweise einem schwingfähigen System. Einfluss kann darüber auf die Aufhängung genommen werden. Bei dynamischen Fahrwerken unterstützt insbesondere die hohe Festigkeit, wodurch die Felgen den ungefederten Massen besser entgegenwirken können.

Ein weiterer Vorteil einer geschmiedeten Felge sind die gleichmäßigen mechanischen und physikalischen Eigenschaften, die durch das Herstellungsverfahren bedingt gleichmäßig verteilt sind. Bei einer Auslegung der geschmiedeten Felge erlaubt dieses mit geringeren Wandstärken trotzdem steife Konstruktionen zu erzielen. Auch erlauben die im Vergleich zu gegossenen Felgen höheren Festigkeitswerten Konstruktionen, die ansonsten mit gegossenen Felgen so nicht möglich wären. Ein geringeres Rotationsmoment und somit eine geringere Trägheit im Vergleich zu anderen Felgenmaterialien ist möglich. Insbesondere bei Sportwagen, aber auch bei anderen drehmomentstarken Fahrzeugen können diese Eigenschaften der Felge genutzt werden, um ein schnelleres Bremsen, eine geringere Abnutzung am Bremssystems, ein besseres Beschleunigungsverhalten und einen niedrigeren Verbrauch zu erzielen.

Für einteilige Felgen, insbesondere geschmiedete Felgen, aber auch mehrteilige Felgen können Legierungen wie AZ 80A, AZ 91 oder auch EN AW 6082 genutzt werden. Die Nutzung von Aluminium-Magnesium-Silicium-Legierungen (AIMgSi) erlaubt eine Wärmebehandlung zur Erhöhung einer Festigkeit und Härte. Die Ausbildung von Magnesiumsilicid (Mg₂Si) zur Erhöhung der Härte, wie sie bei der 6000er-Reihe der Aluminium-Knetlegierungen auftritt, macht die Nutzung dieser Werkstoffgruppe bei der Fertigung von Felgen aus geschmiedetem Material vorteilhaft, sofern eine Wärmebehandlung vorgesehen ist. Als geschmiedetes Material kann insbesondere der Werkstoff EN AW 6061 genutzt werden. Als Härtegrad kann T4 oder auch T6 genutzt werden, wobei je nach Anwendung eine spezifische Härteeinstellung wählbar ist.

Gemäß einer weiteren Ausgestaltung kann jedoch auch eine Felge zum Einsatz kommen, die aus Stahl, einer Aluminiumlegierung und/oder einer Magnesiumlegierung ist und/oder zwei- oder dreiteilig zusammengesetzt sind. Beispielsweise kann eine dreiteilige Felge einen geschmiedeten Stern, ein gegossenes Innenteil und ein rotationsgewalztes Außenbett aufweisen. Als Werkstoff bei einer mehrteiligen Felge kann beispielsweise eine Kombination wie folgt vorgesehen werden: der Stern aus EN AW-6082, das Innenteil aus Al Si 7 MG und das Außenbett aus korrosionsbeständigem EN AW-6082. Auch andere Werkstoffkombinationen können zum Einsatz kommen. Eine zweiteilige Felge kann beispielsweise ein Teil aus einem Aluminiummaterial und ein Teil aus einem Magnesiummaterial aufweisen.

Es können auch gegossene Felgen zum Einsatz kommen, bevorzugt hergestellt mittels eines Niederdruckgussverfahrens, bei dem die flüssige Legierung von unten in der Form aufsteigt. Bevorzugte Gusslegierungen können G-AISi10Cu oder auch G-AISi7Mg sein.

Eine weitere Ausgestaltung einer Felge sieht die Verwendung von CFK vor. CFK ist leichter als Aluminium und stabiler als Stahl. Neben einem Vollcarbon-Rad kann auch eine Aluminium-Carbon-Hybridfelge eingesetzt werden. Letztere verfügt beispielsweise über einen Radstern aus Aluminium, was die Ableitung von Wärme erleichtert. Die Fasern können beispielsweise als Matte hergestellt und verwendet werden. Auch andere Formen der Bereitstellung der Fasern zur Verarbeitung sind möglich, zum Beispiel in gewickelter Form. Bevorzugt sind die Fasern ausgerichtet. So können Vorzugsrichtungen für die Fasern vorgegeben sein, beispielsweise um eine gezielte Festigkeit einstellen zu können. Auch kann es zu Überlagerungen unterschiedlicher Vorzugsrichtungen kommen, beispielsweise zur Erzielung unterschiedlicher Festigkeiten. Die Fasern können auch als Wirrfasern in einer Form abgelegt und genutzt werden.

Wiederum eine Ausgestaltung sieht die Verwendung von Glasfasern vor. Die Glasfasern können beispielsweise als Matte verarbeitet werden oder auch als gewickelte Faser. Die Nutzung von Wirrfasern ist ebenfalls möglich.

Wiederum eine Ausgestaltung sieht die Verwendung von Edelstahl für eine Felge und/oder einen Teil der Verschlussmutter und oder für den Adapter vor. Der Edelstahl kann ein üblicherweise V2A- oder V4A-Stahl genannter Stahl sein, beispielweise nach Stahlschlüssel gemäß EN 10027-1 bzw. -2: 2017-01, 2015-07 Werkstoff-Nr. 1.4303, 1.4305, 1.4401, 1.4404, 1.4529, 1.4571 kann aber auch ein anderer Edelstahl sein, insbesondere ein Edelstahl wie er unter den Bezeichnungen Inox, Nirosta oder auch Edelstahl rostfrei angeboten wird.

Eine Felge bestimmt für den Einsatz mit dem System kann beispielsweise folgende Parameterbereiche aufweisen: Einpresstiefe 20 bis 70, Breite 8,5-12 bei einem Durchmesser von 16 Zoll bis 26 Zoll typische Größen der Felgen mit Zentralverschluss können beispielsweise zwischen 8,5x19 Zoll bis zu 12x26 Zoll liegen, wobei hiermit auch alle Kombinationen an Zwischengrößen gemeint sind. Das Gewicht einer geschmiedeten Felge beträgt vorzugsweise weniger als 10 kg, insbesondere weniger als 9 kg. Durch Gestaltung der Felgengeometrie wie Stern und Streben gelingt es, ein Felgengewicht auch von weniger als 8 kg zu schaffen. Das Felgendesign kann beispielsweise ein 3-, 4- 5-, 6-, 7-, 8-Speichen-Rad oder auch Vielspeichenrad umfassen. Die Speichen können als V-Speiche - die Speichen sind als V-förmige Paare angeordnet, als Doppelspeiche - die Speichen sind als mehr oder weniger parallel verlaufende Paare angeordnet, als Kreuzspeiche mit einer Vielzahl an Speichen, meist mehr als zehn Speichen, oder auch in Form eines Segment-Speichendesigns ausgelegt werden. Auch die Formung eines Scheibenrads ist möglich. Diese Formen und Werte sind beispielhaft für einen ersten Einsatzbereich nutzbar. Auch andere Werte können zum Einsatz kommen. Besondere Merkmale können darüber hinaus ein konkaves oder konvexes Design sein. Ein weiteres Verfahren zur Herstellung von Felgen ist auch unter der Bezeichnung Flow-Forming bekannt und kann hier ebenfalls zum Einsatz kommen.

Grundsätzlich gehen Felgen, Reifen, deren Aufbau und deren Bemaßungen, Werte hierfür, zulässige Kombinationen von Reifen und Felgen und anderes aus den Vorgaben der European Tire and RIM Technical Organisation, abgekürzt ETRTO, hervor. Auf die Inhalte dieser Normen zusammengefasst aktuell im Standards Manual 2018, insbesondere in dem Engineering Design Information Manual 2018, hinsichtlich unter anderem Bemaßung, Dimensionen, Normangaben, Festigkeitsvorgaben etc. nimmt die Erfindung hiermit Bezug.

Ein für ein Fahrzeug passender Satz Felgen umfasst beispielsweise vier Felgen. Hierbei können die Felgen für vorne und hinten unterschiedliche Größen aufweisen. Es können aber auch identische Felgengrößen für alle vier Räder zum Einsatz kommen. Gemäß einer Ausgestaltung kann vorgesehen sein, dass die in Fahrtrichtung links angeordneten Felgen mit Zentralverschlussmuttern festgesetzt werden, die ein Linksgewinde aufweisen und die in Fahrtrichtung rechts angeordneten Felgen mit Zentralverschlussmuttern festgesetzt werden, die ein Rechtsgewinde aufweisen. Beispielsweise kann durch eine derartige Gewindewahl für die Zentralverschlussmutter ein selbständiges Festziehen erfolgen, wenn es zu einem Bremsen kommt bzw. das ABS aktiviert wird. Eine andere Ausgestaltung sieht beispielsweise vor, dass in Fahrrichtung betrachtet die links angeordneten Felgen mit einer Zentralverschlussmutter angezogen werden, die ein Rechtsgewinde aufweisen und die in Fahrtrichtung rechts angeordneten Felgen werden mit Zentralverschlussmuttern angezogen, die ein Linksgewinde aufweisen. Damit kann beispielsweise erreicht werden, dass die Zentralverschlussmuttern sich beim Gasgeben festziehen. Vorzugsweise umfasst daher ein Satz Zentralverschlussmuttern zwei Zentralverschlussmuttern mit Linksgewinde und zwei Zentralverschlussmuttern mit Rechtsgewinde. Entsprechend angepasst sind zwei zugehörige Adapter mit Rechts- und zwei zugehörige Adapter mit Linksgewinde zum Aufschrauben der Zentralverschlussmuttern vorgesehen. Wird ein anderes Fahrzeug mit den Felgen ausgestattet, weisen die Ersatzadapter bevorzugt ebenfalls entsprechende Gewinde auf. Daneben besteht die Möglichkeit, dass ein Satz Felgen mit einem Satz Adapter und Zentralverschlussmuttern befestigt wird, die alle die gleiche Gewinderichtung aufweisen, entweder rechts- oder linksdrehend.

Möglich ist auch ein Webshop, mit einer Datenbank, die einen Speicher mit Daten zu verschiedenen Fahrzeugen und deren Rädern aufweist, und mit Daten in Bezug auf die Komponenten des Systems, wobei der Webshop eine automatisierte Prüfung unter Nutzung der Daten zu den verschiedenen Fahrzeugen und Komponenten hat, die eine Anzeige ermöglicht, ob die zusammengestellten Komponenten im zusammengebauten Zustand von Felge mit Verschlusssystem kompatibel für das Fahrzeug sind oder ob ein oder mehrere Komponenten gegen andere Komponenten auszutauschen sind.

Der Baukasten kann Werte und Angaben vorschlagen bzw. hinterlegt aufweisen, wie sie zum Beispiel direkt aus dieser Offenbarung hervorgehen bzw. aus den genannten Normen entnehmbar sind. Des Weiteren können im Baukasten spezielle Auswahlmöglichkeiten vorgesehen sein wie beispielsweise das Design betreffend, die Oberflächenbeschaffenheit oder vergleichbares. Bevorzugt kann vorgesehen sein, dass die getroffene Auswahl durch Rückgriff auf gespeicherte Bild- und/oder Videodateien der gewünschten Komponenten ansichtsmäßig zusammengefasst wird, um daraus eine Bildansicht bzw. ein Video zu schaffen, das dem Nutzer auf dessen Bildschirm angezeigt werden kann. Hierzu weist das Webshop-System vorzugsweise zumindest einen Grafikkern auf, vorzugsweise mehrere Grafikkerne, die eine entsprechende Darstellung auch in 4K bzw. als dreidimensionale Bild bzw. Video erzeugen und über eine Datenleitung dem Nutzer zur Verfügung stellt. Eine weitere Ausgestaltung sieht vor, dass beim Nutzer selbst ein oder mehrere Grafikkerne vorhanden sind, die entsprechende Daten über die Datenleitung empfangen und daraus ein entsprechendes Bild, Video und/oder virtuelle Welt schaffen. Wiederum kann vorgesehen sein, dass einerseits der Datenbank zugeordnet zumindest ein Grafikkern, bevorzugt eine Vielzahl an Grafikkernen zugeordnet ist, und beim Nutzer ebenfalls zumindest ein Grafikkern zur Verfügung steht. So können die notwendigen Daten über die Datenleitung ausgetauscht und die Rechenkapazität auch verschiedene Orte aufgeteilt werden. Auch kann eine Darstellung auf einer Datenbrille erfolgen, die der Nutzer aufsetzt und die ihm eine virtuelle Ansicht überträgt. Eine Ausgestaltung sieht vor, dass die Auswahl in einer virtuellen Welt erfolgt, die der Nutzer zum Beispiel mittels Datenbrille hervorrufen kann.

Das System, die Zentralverschlussmutter, die Felge und/oder der Webshop treten unter der Bezeichnung "UNDERDOCK" auf.

Das vorgeschlagene System mit Felge bzw. diese Form der Zentralverschlussmutter kann aber nicht nur bei Sportfahrzeugen, sondern auch bei anderen Fahrzeugen zum Einsatz kommen. Dieses können Motorräder, zum Beispiel bei Ein-Schwingen-Systemen, Quads, Trikes, Unimogs, LKWs, SUVs aber auch Off-Roader sein. Auch können fernsteuerbare Roboter, autonome Roboter oder andere Fahrzeuge, auch Flugfahrzeuge mit Rädern wie Hubschrauber, Drohnen, Flugzeuge aller Art und anderes, mit einem derartigen System, mit einem derartigen Zentralverschluss bzw. mit einer derartigen Zentralverschlussmutter ausgestattet sein. Diese Aufzählung von Anwendungszwecken ist nur beispielhaft und nicht abschließend.

Die Figuren zeigen:
- Fig. 1: eine erste Schnittansicht des zusammengebauten Systems mit Felge,
- Fig. 2: eine Explosionsdarstellung der aus Fig.2 hervorgehenden und zusammenbaubaren Teile des Systems,
- Fig. 3: eine Ansicht des zusammengebauten Systems entsprechend der Explosionsdarstellung aus Fig. 2,
- Fig. 4: eine Schnittansicht einer Zentralverschlussmutter,
- Fig. 5: die Zentralverschlussmutter mit zusammengesetztem ersten Teil und zweitem Teil,
- Fig. 6: einen vergrößerten Ausschnitt aus Fig. 1,
- Fig. 7: ein weiteres System mit einer Hülse,
- Fig. 8: eine Explosionsdarstellung des weiteren Systems,
- Fig. 9: einen Adapter,
- Fig. 10: eine Explosionsdarstellung von Hülse und Adapter und
- Fig. 11: eine schematische Ansicht eines Webshops für das System.

Im Folgenden wie auch schon oben wird der Begriff Felge verwendet, da sich dieser Begriff umgangssprachlich eingebürgert hat, insbesondere wenn es um einteilige Räder geht. Die Nutzung des Begriffs Felge bezieht sich jedoch auf ein Rad, das vorzugsweise einteilig, aber auch mehrteilig sein kann.

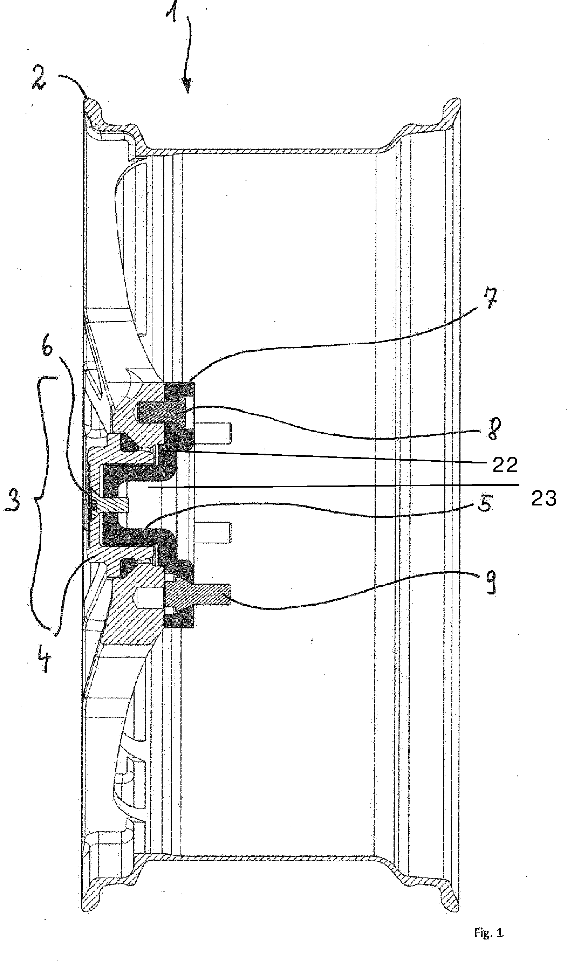

Fig. 1 zeigt ein System 1, aufweisend eine einteilige Felge 2 mit einem Zentralverschlusssystem 3. Das Zentralverschlusssystem 3 weist eine Zentralverschlussmutter 4 auf, die zweiteilig ist. Die Zentralverschlussmutter 4 ist mit einem topfförmigen Hohlzylinder 5 verschraubt. Zusätzlich ist die Zentralverschlussmutter 4 über eine mittige Schraubverbindung 6 mit dem topfförmigen Hohlzylinder 5 gesichert. Die Sicherungsschraube dient als Losdrehsicherung und hält die Zentralverschlussmutter zusammen. Sie wirkt als Verliersicherung nach DIN 10642/7991. Ein Sicherungsring oder Sicherungsstift, wie ansonsten bei Zentralverschlusssystemen auch bekannt, kann dadurch entfallen. Nur zur Vervollständigung wird hinsichtlich sonstiger Sicherungsmöglichkeiten auf den Inhalt der DE 20 2005 018 421 U1 verwiesen, aus der derartige Sicherungsmittel hervorgehen. Mittels der mittigen Schraubverbindung 6 wird der topfförmige Hohlzylinder 5 auch stirnseitig geschlossen. Der topfförmige Hohlzylinder 5 bei dieser Ausgestaltung stofflich verbundener Bestandteil einer Adapterplatte 7. Eine andere Ausgestaltung des Adapters kann eine Ausgestaltung hinsichtlich des Hohlzylinders und dessen Verbindung mit der Adapterplatte aufweisen, wie sie aus der DE 20 2005 018 421 U1 hervorgeht.

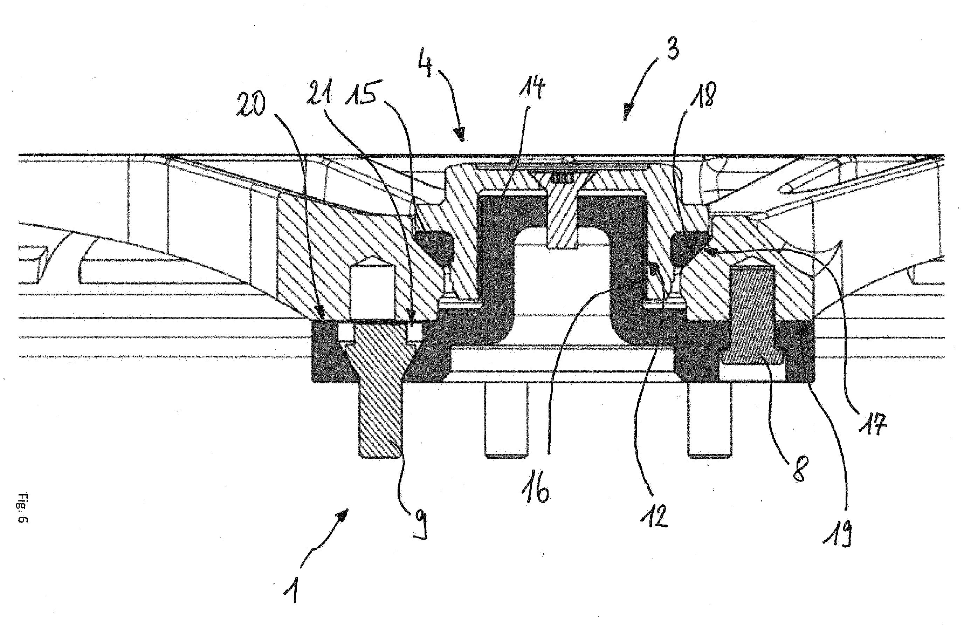

Die Adapterplatte 7 ist mittels Mitnehmern 8, hier in Form von Mitnehmerbolzen, mit der Felge 2 verbunden. Des Weiteren sind Radbolzen 9 vorgesehen, die mit einer nicht näher dargestellten Nabe eines nicht dargestellten Fahrzeugs zu verbinden. Weitere Elemente des Zentralverschlusssystems werden nachfolgend in Fig. 6 näher erläutert.

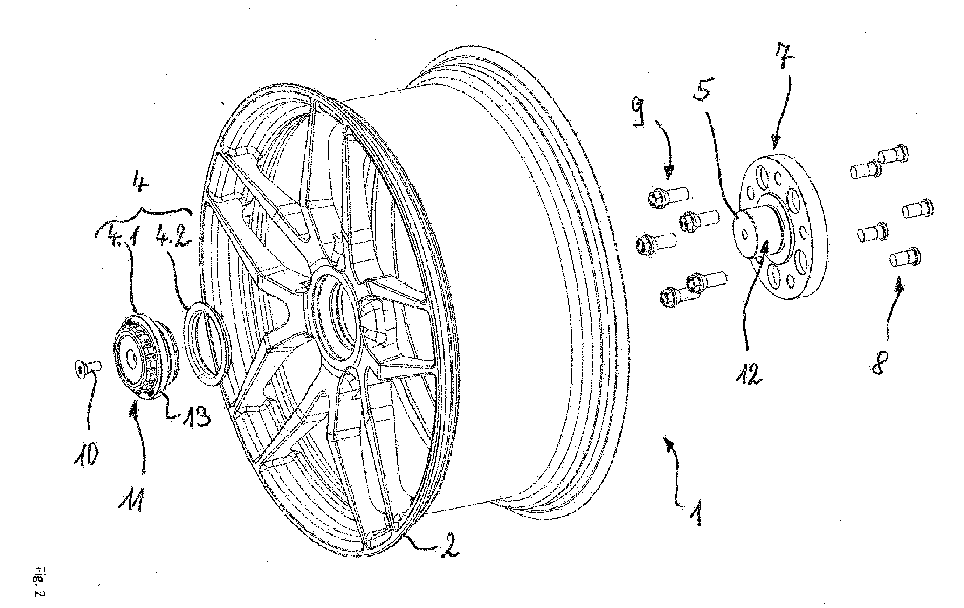

Fig. 2 zeigt eine Explosionsdarstellung des Systems 1. Während auf der außen liegenden Stirnseite der Felge 2 die schon zusammengesetzte, zweiteilige Zentralverschlussmutter 4 und sodann eine Sicherungsschraube 10 für die mittige Schraubverbindung montiert werden, werden auf der Innen liegenden Stirnseite der Felge 2 die Radbolzen 9 und Mitnehmer 8 in der Adapterplatte 7 befestigt, sodann mit der Felge 2 verbunden, so dass im Anschluss dieses zusammengebaute Element mittels der Zentralverschlussmutter 4 gesichert werden kann. Die dargestellte Ausgestaltung weist einen äußeren Vielzahn 11 auf, mittels dem die Zentralverschlussmutter 4 über die Nutzung eines Drehmomentschlüssels oder Drehmomentschraubers angezogen werden kann. Vorzugsweise wird ein mit einem wiederaufladbaren Akkumulator betriebener Drehmomentschrauber genutzt, der ein Drehmoment von mehr als 400 Nm zur Verfügung stellt, besonders bevorzugt ein Drehmoment von zumindest 600 Nm. Um eventuelle Unterschiede hinsichtlich Verschraubung von Zentralverschlussmutter und zur jeweiligen Felge zugehöriger Adapterplatte 7 ausgleichen zu können, weist der Akkuschrauber vorzugsweise ein einstellbares Drehmoment auf. Bevorzugt ist des Weiteren, dass die Drehrichtung einstellbar ist. Damit kann ein vorgebbares Drehmoment angepasst an die jeweilige Kombination von Fahrzeug mit Adapter, Felge und Zentralverschlussmutter zur Anwendung kommen und eine Schädigung durch unsachgemäßes, zu hohes bzw. zu niedriges Drehmoment wird vermieden.

Anstelle eines Vielzahns 11 der Zentralverschlussmutter 4 kann auch ein 4-Kant oder ein 6-Kant vorgesehen werden. Die Gestaltung der Adapterplatte 7 mit dem topfförmigen Hohlzylinder 5 und einem am Hohlzylinder 5 vorgesehenen Außengewinde 12 erlaubt es, dass der Hohlzylinder 5 als Zugbolzen fungiert. Darüber kann ein Anpressdruck über die Fläche der Adapterplatte 7 auf eine zugeordnete komplementäre Fläche der Felge 2 aufgeprägt werden. Der Hohlzylinder 5 weist hierfür vorzugsweise ein Trapezgewinde als Außengewinde auf, während die Zentralverschlussmutter 4 ein dazu äquivalentes Trapezgewinde als Innengewinde hat. Es besteht die Möglichkeit, dass anstelle eines Trapezgewindes auch ein DIN-Gewinde eingesetzt wird. Die Zentralverschlussmutter 4 ist wie hier dargestellt aus einem ersten Teil 4.1 und einem zweiten Teil 4.2 bestehend. Das zweite Teil 4.2 ist als konusförmiger Ring geformt.

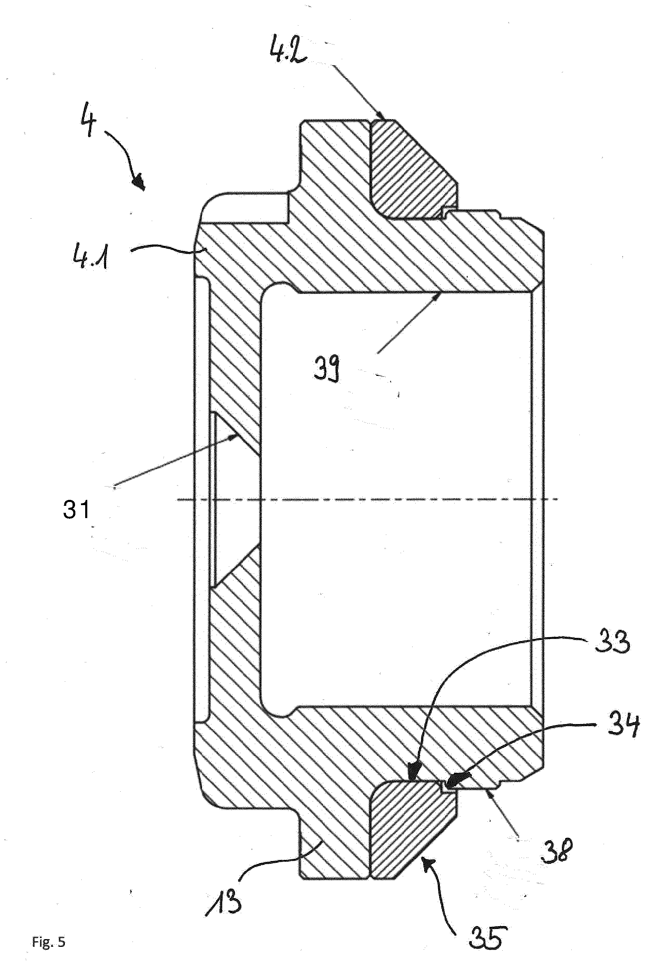

Fig. 2 zeigt des Weiteren das zusammen zu bauende System 1 in einer Schrägansicht. Die Zentralverschlussmutter 4 weist hierbei vorzugsweise wie dargestellt einen auf der Felge 2 aufsitzenden oder annähernd aufsitzenden Kragen 13 auf, der als Abdeckung der Felgenöffnung dient. Dadurch kann beispielsweise ein Eindringen von Schmutz, Bremsabrieb und Feuchtigkeit zumindest verringert, vorzugsweise verhindert werden. Der Kragen 13 kann gemäß einer weiteren Ausgestaltung jedoch auch so dimensioniert werden, dass die Zentralverschlussmutter 4 mit Kragen 13 in die Felgenöffnung eingeschraubt werden kann. Der Kragen 13 sitzt dann in die Felgenöffnung, wobei sich ein nur sehr schmaler Spalt zwischen Kragen und Felgenöffnung bildet, beispielsweise durch eine koaxiale Randgestaltung von Kragen 13 zu Felgenöffnung und damit der Zentralbohrung der Felge. Derartiges geht beispielsweise aus der nachfolgenden Figur 5 hervor. Der Kragen 13 ist fest angeordnet an der Zentralverschlussmutter, vorzugsweise ist der Kragen stofflich mit der Zentralverschlussmutter verbunden. Der Kragen 13 ist vorzugsweise bei einem spanenden Verfahren zur Herstellung der Zentralverschlussmutter aus dem Vollen erzeugt worden.

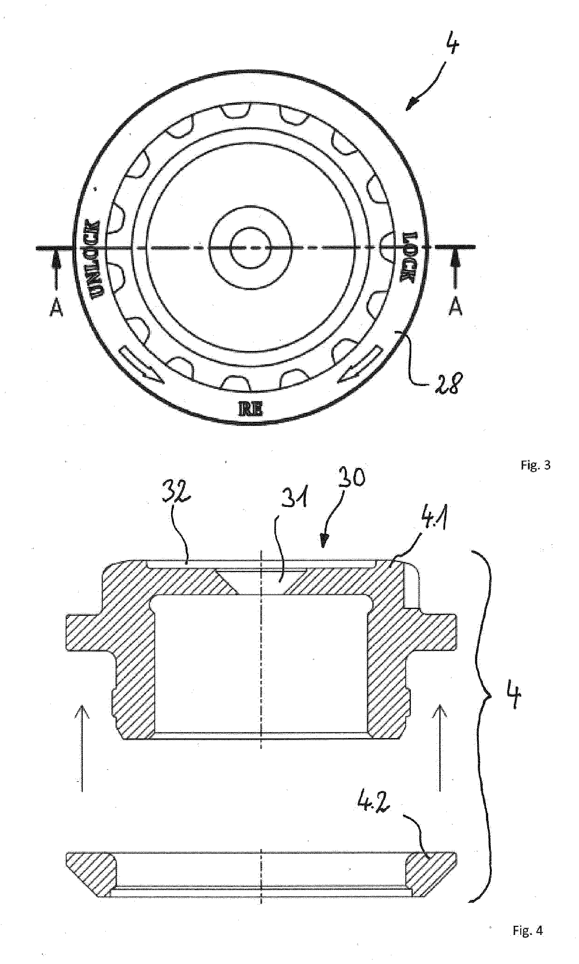

Fig. 3 zeigt eine Aufsicht auf eine weitere Zentralverschlussmutter 4. Die Zentralverschlussmutter 4 ist mit einer Kappe 28 abgedeckt. Diese Kappe 28 kann Bestandteil eines Werkzeugs zum Drehmomentaufbringen auf die Zentralverschlussmutter 4 sein. Die Kappe 28 kann aber auch Bestandteil eines Werkzeugsatzes für das System sein und wird vor einer Nutzung eines beispielsweise Schlagschraubers auf die Zentralverschlussmutter 4 aufgesetzt. Der Bediener des Schlagschraubers kann sodann erkennen, in welche Drehrichtung der Schlagschrauber zum Anziehen der Zentralverschlussmutter 4 bzw. zum Lösen der Zentralverschlussmutter 4 sich drehen muss. Das Anziehen ist durch das "LOCK" und dem dazugehörigen Pfeil gekennzeichnet, das Lösen hingegen durch das "UNLOCK" und dem dazugehörigen Pfeil markiert. Die Pfeile können ebenso wie Schrift erhaben sein, insbesondere auch ertastbar und/oder durch farbliche Hervorhebung, insbesondere auch unterschiedliche farbliche Hervorhebung, für den Bediener unverwechselbar sein. Damit der Bediener weiß, auf welcher Seite des Fahrzeugs die Kappe 28 auf die Zentralverschlussmutter aufzustülpen ist, wird in Fahrtrichtung des Fahrzeugs hin betrachtet eine Seite auf der Kappe 28 mitangegeben, auf der diese zu nutzen ist. Hier ist die Angabe "RE" für die rechte Seite des Fahrzeugs stehend. Eine derartige Kennzeichnung ist insbesondere dann sinnvoll, wenn auf der linken Seite des Fahrzeugs die jeweiligen zugeordneten Adapter vorne und hinten eine erste Gewinderichtung und auf der rechten Seite des Fahrzeugs die dort zugehörigen Adapter eine zur ersten Gewinderichtung entgegengesetzte, zweite Gewinderichtung aufweisen. Eine weitere Ausgestaltung sieht vor, dass die Kappe 28 eine Kennzeichnung aufweist, ob es sich um ein Rechtsgewinde oder um ein Linksgewinde handelt, welches die Zentralverschlussmutter aufweist. Auch für einen derartigen Fall kann die Markierung "RE" genutzt werden. Für ein Linksgewinde kann beispielsweise die Markierung "LI" auf der Kappe 28 angeordnet sein. Des Weiteren besteht die Möglichkeit, dass die Kappe 28 bezüglich ihres, auf die Zentralverschlussmutter aufstülpbaren Abschnitts mit einer Mama-Papa-Verbindung für die Zentralverschlussmutter versehen ist. Die Mama-Papa-Verbindung ist beispielsweise derart, dass die Kappe 28 auf nicht dafür vorgesehene Zentralverschlussmuttern nicht aufstülpbar ist. So kann eine Kappe 28 für ein Rechtsgewinde nicht auf eine Zentralverschlussmutter mit Linksgewinde aufgebracht werden. Umgekehrt kann eine Kappe 28 für ein Linksgewinde nicht auf eine Zentralverschlussmutter mit Rechtsgewinde aufgebracht werden. Bedienungsfehler sind dadurch verhinderbar. Eine auf der Kappe 28 vorgesehene und auch beispielhaft dargestellte Markierung kann jedoch auch auf einer Zentralverschlussmutter selbst angebracht oder aufgebracht sein. Beispielsweise kann hierfür der Kragen 13 der Zentralverschlussmutter 4 dienen. Auf dessen umlaufender Oberfläche 29 besteht die Möglichkeit, beispielsweise mittels Lasern, durch Gravieren, durch Erodieren, mit Aufklebern oder in sonstiger Weise entsprechende Informationen einarbeiten zu können, insbesondere Informationen wie oben zu der Kappe 28 ausgeführt. Es können aber auch andere wie auch zusätzliche Informationen auf dieser umlaufenden Oberfläche 29 dargestellt werden.

Fig. 4 zeigt eine Schnittansicht der Zentralverschlussmutter 4 entlang eines Schnittes A-A aus Fig. 3. Das erste Teil 4.1 und das zweite Teil 4.2 bilden eine Zentralverschlussmutter 4. Hierzu wird das zweite Teil 4.2 über das erste Teil 4.1 in Pfeilrichtung geschoben, verschraubt oder in sonstiger Weise geführt. Das erste Teil 4.1 weist dabei eine komplementäre Geometrie zu dem zweiten Teil 4.2 in einem Bereich auf, in dem das zweite Teil 4.1 am ersten Teil 4.1 zum Anliegen kommt. Dieses geht aus der nachfolgenden Fig. 5 deutlicher hervor. Das erste Teil 4.1 weist an seiner Stirnseite 30 eine für eine Senkschraube passende Senke 31 im topfförmigen Hohlzylinder 5 auf. Mittels der Verschraubung wird eine Verlier- und Losdrehsicherung geschaffen. Weiterhin weist die Stirnseite 30 eine Ausnehmung 32 auf. In diese kann beispielsweise eine hier nicht dargestellte Abdeckplatte eingesetzt werden, die in diesem Falle die Verschraubung schützt.

Fig. 5 zeigt die Zentralverschlussmutter 4 mit zusammengesetztem ersten Teil 4.1 und zweitem Teil 4.2. Das zweite Teil 4.2 ist gegenüber dem ersten Teil 4.1 im zusammengesetztem Zustand rotationsfähig, d.h. eine Relativdrehung zwischen erstem Teil 4.1 und zweitem Teil 4.2 ist möglich. Im Freiraum 33, in dem das zweite Teil 4.2 angeordnet ist, bildet das zweite Teil 4.2 eine drehfähige Kalotte. Der Freiraum 33 wiederum ist derart, dass das zweite Teil 4.2 zwar am Kragen 13 anstößt und Reibkontakt hat. Der Außendurchmesser des ersten Teils 4.1 im Freiraum ist jedoch geringer als ein Innendurchmesser des zweiten Teils 4.2 benachbart dazu. Dadurch können hier keine oder aber nur verminderte Reibungen auftreten. Durch einen Freistich 34 im Innendurchmesser des zweiten Teils 4.2 wird einerseits sichergestellt, dass zwischen dem Außengewinde 38 des ersten Teils 4.1 und dem zweiten Teil 4.2 kein Kontakt vorliegt. Andererseits kann dadurch eine Konkavfläche 35 ermöglicht werden, die durch die Überlappung des Außengewindes 38 verlängert ist. Als Reibfläche verbleibt daher die am Kragen 13 anstoßende Oberfläche des zweiten Teils 4.2. Da das zweite Teil 4.2 eine Konkavfläche 35 aufweist, die aufgrund des Winkels und der Länge größer ist als die mit dem Kragen 13 in Kontakt befindliche Reibfläche, kommt es beim Anziehen der Zentralverschlussmutter 4 über deren Innengewinde 39 hinsichtlich einer Relativdrehung zu einem Haften-bleiben dieser Konkavfläche 35 an der Felge, während die Relativbewegung zwischen erstem Teil 4.1 und zweitem Teil 4.2 noch weiter ermöglicht ist und damit eine höhere Zugkraft über das Drehmoment induziert werden kann.

Fig. 6 zeigt einen Ausschnitt aus einer Darstellung des Systems 1, wie sie aus Figur 1 hervorgeht. Das zusammengesetzte Zentralverschlusssystem 3 zeigt hier deutlich die zweiteilige Zentralverschlussmutter 4 mit einem ersten Teil 14 und einem zweiten Teil 15. Das erste Teil 14 weist ein Innengewinde 16 auf, worüber eine Verschraubung mit dem Außengewinde 12 des Hohlzylinders 5 ermöglicht ist. Der Kragen 13 der Zentralverschlussmutter 4 ist in die Felgenöffnung eingeschraubt und bildet mit dieser einen kreisförmig umlaufenden Dichtungsspalt. Das zweite Teil 15 weist einen Außenkonus 17 auf, der auf einem Innenkonus 18 der Felge 2 zum Aufliegen kommt. Der Innenkonus 18 und der Außenkonus 17 weisen zueinander komplementäre Steigungswinkel auf. Dadurch, dass das erste Teil 14 und das zweite Teil 15 voneinander getrennt aber zueinander drehbar beweglich angeordnet sind, kann ein höheres Drehmoment aufgebracht werden als wenn die Zentralverschlussmutter 4 einteilig wäre. In diesem Sinne ist die Zweiteiligkeit der Zentralverschlussmutter daher wie folgt zu verstehen: das Ermöglichen dieser Relativbewegung zwischen erstem und zweiten Teil 14, 15 beim Anziehen der Zentralverschlussmutter 4. Das zweite Teil 15 stützt sich hierbei am Kragen 13 des ersten Teils 14 ab.

Des Weiteren geht aus Fig. 6 deutlich hervor, dass die Dimensionierung des Durchmessers der Adapterplatte 7 angepasst ist an eine Adapter-Auflagenfläche 19, die die Felge 2 bildet. Die Adapterplatte 7 weist eine erste Ebene 20 auf, die die Felgen-Auflagefläche 21 beinhaltet. Weiterhin erstreckt sich von der ersten Ebene 20 aus ein Sockel. Der Sockel 22 wiederum bildet eine koaxiale Zylinderfläche mit der Zentralbohrung der Felge. Dieses ermöglicht eine Zentrierung wie auch einen Formschluss. Auf dem Sockel 22 ist der topfförmige Hohlzylinder 5 angeordnet, wobei sich ein Innenhohlraum 23 vom Hohlzylinder 5 durch den Adapter 7 zur Aufnahme der Nabe erstreckt. Der Innenhohlraum 23 ist bevorzugt so dimensioniert, dass er zentrisch passgenau mit der Nabe zusammensetzbar ist. Die Adapter-Auflagenfläche 19 und die Felgen-Auflagenfläche 21 weisen bevorzugt den gleichen Umfangsdurchmesser auf und schließen hierbei bündig ab. Dieses erlaubt einen Kraftfluss über die gesamte zur Verfügung stehende Kontaktfläche.

Fig. 6 zeigt Mitnehmer 8, die in die Adapterplatte 7 eingepresst sind. Das Einpressen der Mitnehmer 8, insbesondere von Mitnehmerbolzen, erfolgt derart, dass die Mitnehmer 8 nichtlösbar verpresst sind. Das bedeutet, dass entweder unter Zerstörung von zumindest den Mitnehmern nur ein Lösen der Verbindung möglich ist oder aber durch extreme Wärmeunterschiede zwischen Adapterplatte und Mitnehmer 8. Die Mitnehmer sind bevorzugt aus Stahl, die Adapterplatte 7 hingegen aus einer beispielsweise Aluminiumlegierung. Es hat sich herausgestellt, dass durch das Verpressen es nicht zum Knacken kommt, wie es bei einer Verschraubung zwischen Adapterplatte und Mitnehmer im Betrieb auftritt.

Aus Figur 6 ist auch entnehmbar, dass in die Adapterplatte 7 eingelassene Radbolzen 9 mittels der Adapter-Auflagenfläche 19 felgenseitig abgeschirmt werden. Die Radbolzen 9 sitzen somit in einer abgeschlossenen Höhle, wo sie gegen Umwelteinflüsse wie Schmutz und Feuchtigkeit weitgehend geschützt sind.

Wie aus den Ansichten der Fig. 1 bis 6 sich entnehmen lässt, werden die hier dargestellten Speichen sehr nah nach Innen und auch sehr weit nach Innen zum Stern gekrümmt von Felgenrad hereingeführt. Durch diese geometrische Gestaltung gelingt es, die Adapterplatte felgenseitig abzuschirmen und trotzdem eine ausreichende Festigkeit und Steifigkeit der Felge zu erzielen. Wird die Felge an ein anderes Fahrzeug mit anderen Vorgaben angeordnet, kann durch eine an dieses Fahrzeug angepasste andere Adapterplatte trotzdem die gleiche Kontaktfläche mit der Felge und die sonstige Nutzung der Teile des Systems 1 gesichert werden.

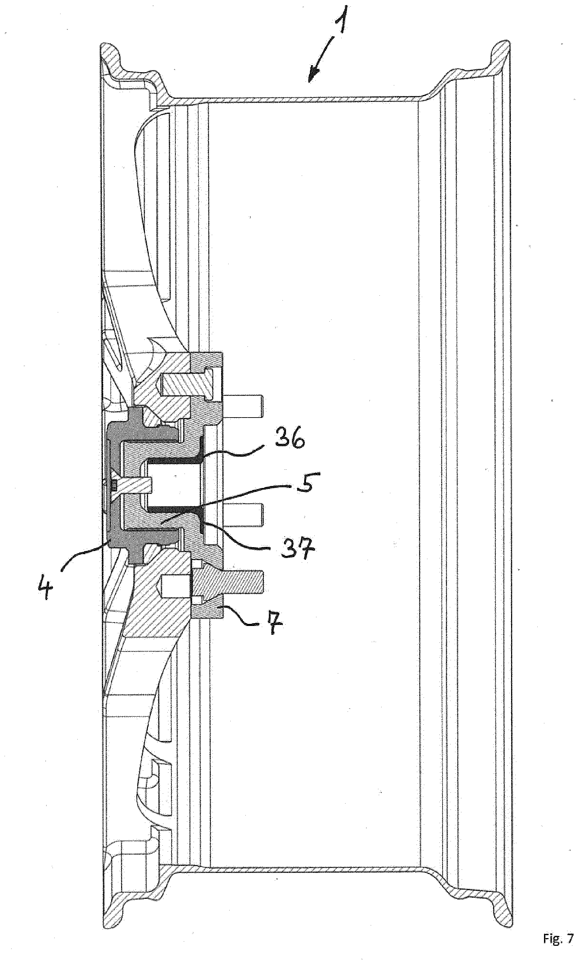

Fig. 7 zeigt ein weiteres System 1, welches im Wesentlichen mit demjenigen übereinstimmt, das aus Fig. 1 hervorgeht. Bei diesem System 1 aus Fig. 7 weist jedoch die Zentralverschlussmutter 4 eine zusätzliche Hülse 36 zur Verstärkung auf. Die Hülse 36 ist im Inneren des Hohlzylinders 5 angeordnet und dient zur Verstärkung des Hohlzylinders 5 bei der Übertragung von Zugkräften auf die Adapterplatte 7. Die Zugkräfte werden über die Zentralverschlussmutter 4 auf den als Zugbolzen wirkenden Hohlzylinder 5 und auf die Adapterplatte 7 aufgeprägt. Hierzu stützt sich ein Bund 37 an einer Anlagefläche im Adapter ab.

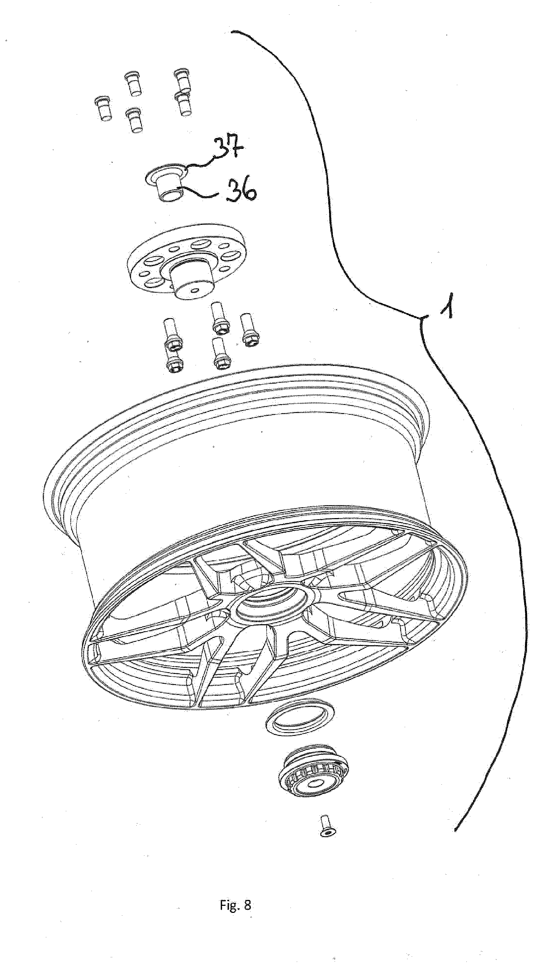

Fig. 8 zeigt eine Explosionsdarstellung der Bauteile des Systems 1 aus Fig. 7. Neben den schon aus Fig. 2 bekannten Komponenten ist hier zusätzlich die Hülse 36 dargestellt, die wiederum in der dargestellten Ausführung einen umlaufenden Bund 37 besitzt.

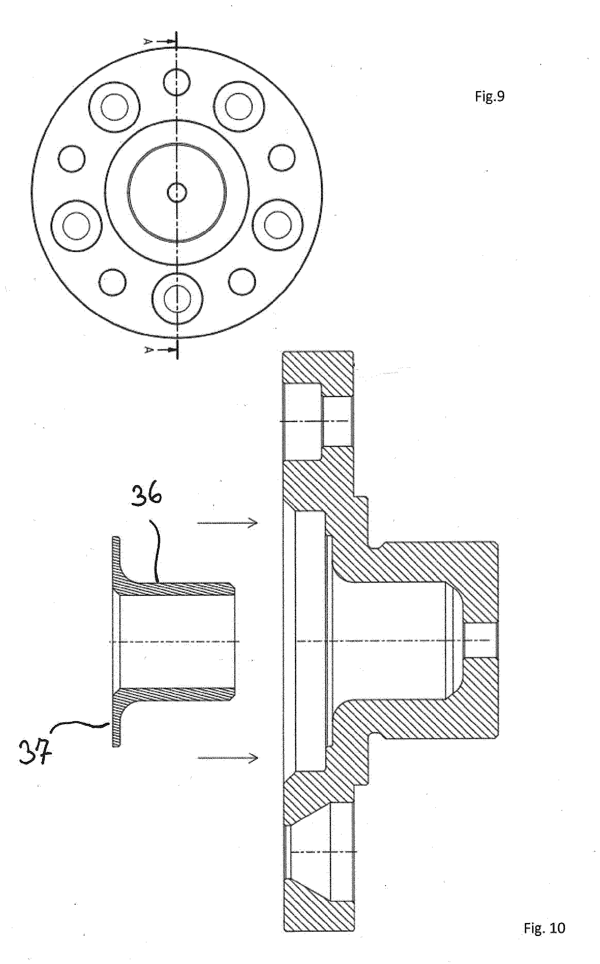

Fig. 9 zeigt einen Adapter in Aufsicht mit einer angezeigten Schnittebene A-A, die in der nachfolgenden Figur näher erläutert wird.

Fig. 10 zeigt in Explosionsdarstellung entlang der Schnittebene A-A eine Hülse 36 mit Bund 37. Die Pfeile verdeutlichen, dass die Hülse 36 in den Adapter eingesetzt wird. Die Hülse 36 kann in den topfförmigen Hohlzylinder 5 eingedreht werden. Hierzu weist der Hohlzylinder 5 zum Beispiel ein Innengewinde und die Hülse 36 ein Außengewinde auf. Das Innengewinde ist bevorzugt länger als das Außengewinde. Die Hülse 36 wird solange eingedreht, bis der Bund 37 bündig im Adapter anliegt. Die Hülse 36 ist vorzugsweise hohl und an beiden Stirnseiten offen. Die Wandstärke der Hülse 36 kann geringer sein als die Wandstärke des die Hülse 36 umgebenden Hohlzylinders 5. Bevorzugt ist eine Festigkeit des Materials der Hülse 36 größer als eine Festigkeit des Materials des Hohlzylinders 5. Die Hülse 36 kann auch ohne Bund vorgesehen sein. Des Weiteren kann die Hülse 36 auch an ein oder zwei Stirnseiten geschlossen sein, zumindest zum Teil. Auch kann die Hülse 36 ein oder mehrere Streben in ihrem Inneren aufweisen, die die Festigkeit der Hülse stärken. Beispielsweise ist die Hülse gegossen, aus dem Vollen erstellt, mittels eines Sinterpressverfahrens oder auch mittels eines 3d-Verfahrens aus metallischem Material hergestellt.

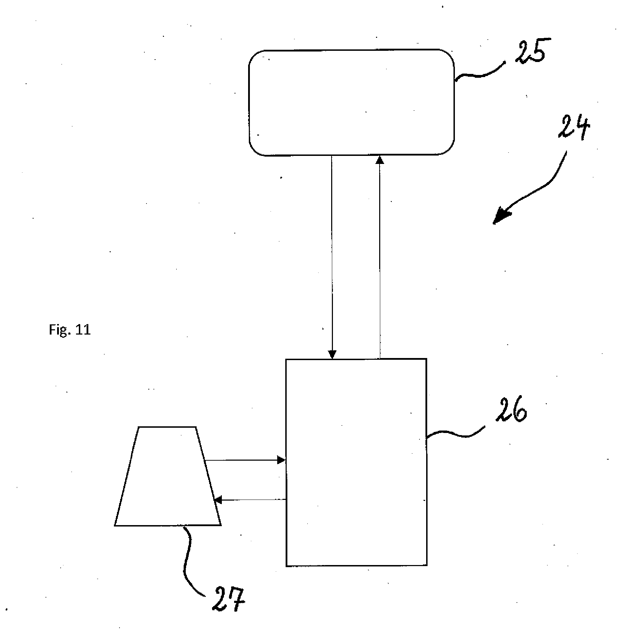

Fig. 11 zeigt in beispielhafter schematischer Ausgestaltung ein Webshop-System 24, mittels dem das vorgeschlagene System für einen Nutzer automatisiert zusammenstellbar ist. Mittels einer Eingabe/Ausgabe-Einheit 25, die mit einer Recheneinheit 26 draht- und/oder funkgestützt verbunden ist, können notwendige Informationen ausgetauscht werden. So können die Datensätze in einer Datenbank miteinander verknüpft und Kombinationen erstellt wie auch verworfen werden. Mittels ein oder mehrerer Grafikprozessoren 27 können sodann entsprechend der Datensätze Fotofolgen, Videos wie auch Rundumansichten errechnet und dem Nutzer sodann zur Verfügung gestellt werden. Dieses erlaubt zum Beispiel auch die Nutzung einer 3D-Darstellung, beispielsweise mittels einer 3D-Brille. Mittels einer bidirektionalen Verbindung kann so auch das Zusammenbauen und Auseinanderbauen des Systems mit Felge virtuell erfolgen.

Das System mit Felge und zugehörigem Zentralverschlusssystem dient wie aufgezeigt als Adaptersystem, welches für jedes Fahrzeug und für jede sonstige Verwendung bezüglich jeweiliger Anschlussmaße anpassbar ist, die mit einer Spurverbreiterung für jede Felge einhergeht, die an die Felge anpassbar ist. Durch diese Konstruktion ist es nicht notwendig, trotz Adapterplatte mit Spurverbreiterung und Zentralverschlusssystem eine Bremse zu ersetzen.

### Bezugszeichenliste

- 1: System
- 2: Felge, beinhaltet aber auch ein Rad
- 3: Zentralverschlusssystem
- 4: Zentralverschlussmutter
- 4.1: erstes Teil der Zentralverschlussmutter
- 4.2: zweites Teil der Zentralverschlussmutter
- 5: Topfförmiger Hohlzylinder
- 6: Mittige Schraubverbindung
- 7: Adapterplatte
- 8: Mitnehmer, insbesondere Mitnehmerbolzen
- 9: Radbolzen
- 10: Sicherungsschraube
- 11: Vielzahn
- 12: Außengewinde des Hohlzylinders
- 13: Kragen des ersten Teils der Zentralverschlussmutter
- 14: Erste Teil der Zentralverschlussmutter
- 15: Zweite Teil der Zentralverschlussmutter
- 16: Innengewinde der Zentralverschlussmutter
- 17: Außenkonus des zweiten Teils
- 18: Innenkonus der Felge
- 19: Adapter-Auflagenfläche
- 20: Erste Ebene
- 21: Felgen-Anlagefläche
- 22: Sockel
- 23: Innenhohlraum
- 24: Webshop-System
- 25: Eingabe/Ausgabe-Einheit
- 26: Recheneinheit
- 27: Grafikprozessor
- 28: Kappe
- 29: Umlaufende Oberfläche
- 30: Stirnseite
- 31: Senke
- 32: Ausnehmung
- 33: Freiraum
- 34: Freistich
- 35: Konkavfläche
- 36: Hülse
- 37: Umlaufender Bund
- 38: Außengewinde der Zentralverschlussmutter
- 39: Innengewinde der Zentralverschlussmutter

## Patentansprüche

1. System (1), aufweisend eine Felge (2) mit einem Zentralverschlusssystem (3), wobei die Felge (2) lediglich eine Zentralbohrung zur Befestigung an der Radnabe hat,
wobei die Felge (2) vorzugsweise eine geschmiedete Felge (2) aus einem Aluminiummaterial ist,
wobei das Zentralverschlusssystem (3) eine Zentralverschlussmutter (4),eine Adapterplatte (7) und eine Sicherungsschraube (6) zum Sichern der Zentralverschlussmutter (4) an der Adapterplatte (7) aufweist,
wobei die Felge (2) auf der zu der Radnabe zugewandten Seite mehrere Einlassungen zur Aufnahme von zumindest jeweils einem Mitnehmer (8) aufweist, wobei die Einlassungen vorzugsweise geschlossene Bohrungen sind,
wobei die Mitnehmer vorzugsweise Mitnehmerbolzen sind,
wobei das Zentralverschlusssystem (3) eine Adapterplatte (7) zur Anordnung und Befestigung an einer ersten Radnabe aufweist und die Adapterplatte (7) einen Lochkreis mit Durchlässen zur Aufnahme von Radbolzen (9) hat,
wobei die Adapterplatte (7) die Mitnehmer (8) aufweist, die komplementär zu den Einlassungen der Felge (2) sind,
wobei die Adapterplatte (7) eine erste Ebene (20) aufweist, in der die Durchlässe zur Aufnahme der Radbolzen angeordnet sind,
wobei die Adapterplatte (7) einen mittig zentriert durch die Zentralbohrung in die Felge (2) ragenden Hohlzylinder (5) hat, der ein Außengewinde (12) aufweist, welches komplementär zu einem Innengewinde (16) der Zentralverschlussmutter (4) ist,
wobei der Hohlzylinder vorzugsweise stoffschlüssig mit der Adapterplatte (7) verbunden ist,
wobei der Hohlzylinder topfförmig ist,
wobei der Hohlzylinder (5) einen Innenhohlraum (23) zur Umhüllung einer Radnabe zumindest entlang des Umfangs der Radnabe aufweist,
wobei der Hohlzylinder eine Umhüllung stirnseitig zur Radnabe aufweist,
wobei die Zentralverschlussmutter (4) einen Außenkonus aufweist, dessen Form komplementär zu einem Innenkonus der Felge (2) ist,
wobei die Zentralverschlussmutter (4) topfförmig ist,
wobei die Sicherungsschraube in eine Stirnseite des Hohlzylinders (5) verschraubbar ist,
**dadurch gekennzeichnet, dass**
das Außengewinde (12) des Hohlzylinders (5) der Adapterplatte (7) zwischen der ersten Ebene (20) der Adapterplatte (7) und der Stirnseite des Hohlzylinders (5) angeordnet ist.

2. System (1) nach Anspruch 1, **dadurch gekennzeichnet, dass** die Adapterplatte (7) einen kreisförmigen Sockel (22) aufweist, von dem sich der Hohlzylinder (5) in die Felge (2) erstreckt, wobei der Sockel (22) eine Spielpassung mit der Zentralbohrung bildet, während die Mitnehmer (8) eine Spielpassung mit den Einlassungen in der Felge (2) bilden,
und/oder
die Adapterplatte (7) eine Vorderseite hat, die die erste Ebene (20) aufweist, von der sich direkt der Sockel (22) erhebt, wobei der Sockel (22) eine zweite Ebene bildet, die parallel zu der ersten Ebene (20) verläuft, wobei in der ersten Ebene (20) die Durchlässe für die Radbolzen (9) und Durchbohrungen für die Mitnehmer (8) angeordnet sind, und die erste Ebene (20) eine Felgen-Anlagefläche (21) für die Felge (2) bildet, wobei die Felge (2) eine zu der Felgen-Anlagefläche (21) komplementäre Adapter-Auflagefläche (19) hat, und die Felgen-Anlagefläche (21) und die Adapter-Auflagefläche (19) aneinander liegen, und der Sockel (22) mit der Felge (2) ein Paar an zwei zueinander koaxialen Zylinderflächen bildet, die einen zentrierten Formschluss in allen Richtungen der zu einer Zylinderachse der koaxialen Zylinderflächen senkrechten Ebene bilden,
und/oder
die Adapterplatte (7) eine Rückseite hat, die eine plane Ebene ist, in der die Durchlässe für die Radbolzen (9), eine Vielzahl an Durchbohrungen für die Mitnehmer (8) und die Öffnung in den Innenhohlraum (23) des topfförmigen Hohlzylinders angeordnet sind, wobei der Innenhohlraum (23) in einer topfseitigen Stirnfläche eine zentrierte, durchgehende Gewindebohrung für eine Verschraubung von Zentralverschlussmutter (4) und Adapterplatte (7) aufweist,
und/oder
das System (1) mit einer zweiten Adapterplatte versehen ist, die einen vom ersten Lochkreis einer ersten Adapterplatte (7) unterschiedlichen Lochkreis zur Befestigung an einer zweiten Radnabe eines zum Fahrzeug einer ersten Radnabe anderen Fahrzeugs aufweist, wobei die Mitnehmer (8) der zweiten Adapterplatte (7) ebenfalls komplementär zu den Einlassungen der Felge (2) sind so wie die Mitnehmer der ersten Adapterplatte.

3. System (1) nach Anspruch 1 oder 2, **dadurch gekennzeichnet, dass** die angezogene Zentralverschlussmutter (4) vollständig umgeben von der Felge (2) unterhalb einer Felgen-Stirnfläche liegt und eine stirnseitige Abdeckung des Hohlzylinders (5), insbesondere des topfförmigen Hohlzylinders, die in eine Zentralverschlussmutterstirnseite eingesetzt ist, dann ebenfalls unterhalb der Felgen-Stirnfläche verbleibt.

## Claims

1. A system (1) having a wheel rim (2) with a central locking system (3),
the wheel rim (2) having only one central bore for fastening to the wheel hub,
the wheel rim (2) preferably being a forged wheel rim (2) consisting of an aluminium material,
the central locking system (3) having a central locking nut (4), an adapter plate (7), and a securing screw (6) for securing the central locking nut (4) to the adapter plate (7),
the wheel rim (2) having multiple recesses on the side facing the wheel hub, for receiving at least one driver (8) in each case, the recesses preferably being blind bores,
the drivers preferably being driver bolts,
the central locking system (3) having an adapter plate (7) for arrangement on and fastening to a first wheel hub, and the adapter plate (7) having a circle of holes with feedthroughs for receiving wheel bolts (9),
the adapter plate (7) having the drivers (8) which are complementary to the recesses in the wheel rim (2),
the adapter plate (7) having a first plane (20) in which the feedthroughs for receiving the wheel bolts are arranged,
the adapter plate (7) having a hollow cylinder (5), which protrudes in a centred manner through the middle of the central bore in the wheel rim (2) and has an external thread (12) which is complementary to an internal thread (16) of the central locking nut (4),
the hollow cylinder preferably being integrally joined to the adapter plate (7),
the hollow cylinder being pot-shaped,
the hollow cylinder (5) having an inner cavity (23) for enclosing a wheel hub at least around the circumference of the wheel hub,
the hollow cylinder having an enclosure at the end face of the wheel hub,
the central locking nut (4) having an outer cone, the shape of which is complementary to an inner cone of the wheel rim (2),
the central locking nut (4) being pot-shaped,
the securing screw being screwable into an end face of the hollow cylinder (5),
**characterised in that**
the external thread (12) of the hollow cylinder (5) of the adapter plate (7) is situated between the first plane (20) of the adapter plate (7) and the end face of the hollow cylinder (5).

2. The system (1) according to Claim 1, **characterised in that** the adapter plate (7) has a circular base (22) from which the hollow cylinder (5) extends into the wheel rim (2), wherein the base (22) forms a clearance fit with the central bore, while the drivers (8) form a clearance fit with the recesses in the wheel rim (2),
and/or
the adapter plate (7) has a front side, which has the first plane (20) from which the base (22) directly rises, wherein the base (22) forms a second plane which runs parallel to the first plane (20), wherein the feedthroughs for the wheel bolts (9) and through-bores for the drivers (8) are arranged in the first plane (20), and the first plane (20) forms a wheel rim bearing face (21) for the wheel rim (2), wherein the wheel rim (2) has an adapter bearing face (19) which is complementary to the wheel rim bearing face (21), and the wheel rim bearing face (21) and the adapter bearing face (19) bear against each other, and the base (22) together with the wheel rim (2) forms a pair on two mutually coaxial cylindrical faces which form a centred form fit in all directions of the plane perpendicular to a cylinder axis of the coaxial cylindrical faces,
and/or
the adapter plate (7) has a rear side which is a flat plane in which the feedthroughs for the wheel bolts (9), a plurality of through-bores for the drivers (8), and the opening into the inner cavity (23) of the pot-shaped hollow cylinder are arranged, wherein the inner cavity (23) has, in a pot-side end face, a centred, continuous threaded bore for screw-fastening the central locking nut (4) and the adapter plate (7),
and/or
the system (1) is provided with a second adapter plate which has a circle of holes, which is different from the first circle of holes of a first adapter plate (7), for fastening to a second wheel hub of a vehicle other than the vehicle of a first wheel hub, wherein the drivers (8) of the second adapter plate (7) are likewise complementary to the recesses in the wheel rim (2), as are the drivers of the first adapter plate.

3. The system (1) according to Claim 1 or 2, **characterised in that** the tightened central locking nut (4) lies below a wheel rim end face, completely surrounded by the wheel rim (2), and an end-face cover of the hollow cylinder (5), in particular of the pot-shaped hollow cylinder, which is inserted into a central locking nut end face, then likewise remains below the wheel rim end face.

## Revendications

1. Système (1) comportant une jante (2) dotée d'un système de verrouillage centralisé (3),
la jante (2) disposant uniquement d'un perçage central pour sa fixation sur le moyeu de roue,
la jante (2) étant de préférence une jante (2) forgée en une matière aluminium,
le système de verrouillage centralisé (3) comportant un écrou (4) de verrouillage centralisé, une plaque adaptatrice (7) et une vis de blocage (6), destinée à bloquer l'écrou (4) de verrouillage centralisé sur la plaque adaptatrice (7),
sur sa face tournée vers le moyeu de roue, la jante (2) comportant plusieurs gorges destinées à recevoir chacune au moins un entraîneur (8), les gorges étant de préférence des perçages fermés,
les entraîneurs étant de préférence des boulons entraîneurs,
le système de verrouillage centralisé (3) disposant d'une plaque adaptatrice (7) destinée à être placée et fixée sur un premier moyeu de roue et la plaque adaptatrice (7) disposant d'un cercle de boulonnage doté de passages destinés à recevoir des boulons de roue (9),
la plaque adaptatrice (7) comportant les entraîneurs (8), qui sont complémentaires des gorges de la jante (2),
la plaque adaptatrice (7) comportant un premier plan (20) dans lequel sont placés les passages destinés à recevoir les boulons de roue,
la plaque adaptatrice (7) disposant d'un cylindre creux (5) saillant en étant centré au milieu à travers le perçage central dans la jante (2), qui comporte un filetage (12), lequel est complémentaire à un taraudage (16) de l'écrou (4) de verrouillage centralisé,
le cylindre creux étant assemblé de préférence par matière avec la plaque adaptatrice (7),
le cylindre creux ayant la forme d'un pot,
le cylindre creux (5) comportant un espace intérieur creux (23), destiné à envelopper un moyeu de roue au moins le long de la périphérie du moyeu de roue,
le cylindre creux comportant une enveloppe, sur la face frontale vers le moyeu de roue,
l'écrou (4) de verrouillage centralisé comportant un cône extérieur, dont la forme est complémentaire à un cône intérieur de la jante (2)
l'écrou (4) de verrouillage centralisé ayant la forme d'un pot,
la vis de blocage étant apte à être vissée dans une face frontale du cylindre creux (5),
**caractérisé en ce que**
le filetage (12) du cylindre creux (5) de la plaque adaptatrice (7) est placé entre le premier plan (20) de la plaque adaptatrice (7) et la face frontale du cylindre creux (5).

2. Système (1) selon la revendication 1, **caractérisé en ce que** la plaque adaptatrice (7) comporte un socle (22) de forme circulaire à partir duquel le cylindre creux (5) s'étend dans la jante (2), le socle (22) formant un ajustement avec jeu avec le perçage central, alors que les entraîneurs (8) forment un ajustement avec jeu avec les gorges dans la jante (2), et/ou
la plaque adaptatrice (7) dispose d'une face avant qui comporte le premier plan (20), à partir de laquelle le socle (22) s'élève directement, le socle (22) formant un deuxième plan, qui s'écoule à la parallèle du premier plan (20), dans le premier plan (20) étant placés les passages pour les boulons de roue (9) et des perçages traversants pour les entraîneurs (8) et le premier plan (20) formant une surface d'appui (21) de jante pour la jante (2), la jante (2) disposant d'une surface de support (19) d'adaptateur complémentaire à la surface d'appui (21) de jante et la surface d'appui (21) de jante et la surface de support (19) d'adaptateur étant adjacentes et le socle (22) formant avec la jante (2) une paire de deux surfaces cylindriques coaxiales l'une avec l'autre qui forment une complémentarité de forme centrée dans toutes les directions du plan perpendiculaire à un axe de cylindre des surfaces cylindriques coaxiales,
et/ou
la plaque adaptatrice (7) disposant d'une face arrière, qui est un plan plat dans lequel sont placés les passages pour les boulons de roue (9), une pluralité de perçages traversants pour les entraîneurs (8) et l'ouverture dans l'espace intérieur creux (23) du cylindre creux en forme de pot, l'espace intérieur creux (23) comportant dans une surface frontale du côté du pot un taraudage traversant centré pour un vissage de l'écrou (4) de verrouillage centralisé et de la plaque adaptatrice (7),
et/ou
le système (1) est muni d'une deuxième plaque adaptatrice qui comporte un cercle de boulonnage différent du premier cercle de boulonnage d'une première plaque adaptatrice (7), pour la fixation sur un deuxième moyeu de roue d'un véhicule autre que le véhicule d'un premier moyeu de roue, les entraîneurs (8) de la deuxième plaque adaptatrice (7) étant également complémentaires aux gorges de la jante (2), tout comme les entraîneurs de la première plaque adaptatrice.

3. Système (1) selon la revendication 1 ou 2, **caractérisé en ce que** l'écrou (4) de verrouillage centralisé serré, totalement entouré par la jante (2) se situe en-dessous d'une surface frontale de la jante et **en ce qu'**un recouvrement frontal du cylindre creux (5), notamment du cylindre creux en forme de pot qui est inséré dans une face frontale de l'écrou de verrouillage centralisé reste alors également en-dessous de la surface frontale de la jante.
